# EUROPEAN PATENT APPLICATION

(11) **EP 1 640 904 A1**
(43) Date of publication of application: **29.03.2006**
(21) Application number: 05255476.3
(22) Date of filing: 07.09.2005
(51) Int. Cl.: G06Q 30/00

(54) **Resource selection based on skills and availability in a telecommunications system**

(30) Priority: 22.09.2004 US 947046
(71) Applicant: Avaya Technology Corp., Basking Ridge, New Jersey 07920-2332 (US)
(72) Inventor: Seligmann, Doree Duncan, New York New York 10021 (US); Sammon, Michael J., Watchung New Jersey 07069 (US); Brotman, Lynne Shapiro, Westfield New Jersey 07090 (US); Khan, Anjum, Ilford Essex IG2 7JR (GB)
(74) Representative: McCallum, Graeme David

(57) **Abstract**

A method is disclosed that enables a user to determine which resources are both skills-qualified and available to perform a specified task, without some of the costs, disadvantages, and limitations of techniques in the prior art. The illustrative embodiment of the present invention is based on the recognition that the consideration of various conditions of *availability*, in addition to the consideration of the *skills present,* affects the outcome of identifying the resources that can and will perform a task. In other words, the illustrative embodiment of the present invention enables a user to determine which resources can perform one or more tasks, based on the criteria of: (i) a skills requirement, (ii) a geographic requirement, and (iii) a time requirement.

## Description

The present invention relates to telecommunications in general, and, more particularly, to a technique for intelligently identifying the resources for performing a task.

There are many known techniques for assigning worker resources to tasks that are to be performed. Some techniques recognize the importance of assigning resources to tasks by comparing the skills of the resources with the skill required by each task, in order to adequately service individual tasks. A host organization (*e.g*., a customer service center, *etc*.) that conforms to such techniques receives tasks that need to be performed, attempts to understand what skill the task requires, and then assigns each task to a worker who possesses the skill to work the task. The list of skills that are possessed by workers (*i.e*., resources) is typically defined by the manager or others associated with the resources' host organization.

Some tasks, in fact, require that resources possess multiple skills. For example, a telephone caller with a problem contacts a customer support center. The task, which is to fix the caller's problem, requires a variety of skills, possibly including expertise in one or more software or hardware systems, in one or more sectors of the financial market, or in one or more products. Furthermore, the caller, situated halfway around the world, speaks only a specific language and, therefore, requires a resource fluent in that language. Depending on the circumstances, multiple resources might be required to fix the problem, which increases the challenge of coupling "skills-qualified" resources with the task or tasks at hand.

The present invention enables a user to determine which resources are both skills-qualified and available to perform a specified task, without some of the costs, disadvantages, and limitations of techniques in the prior art. The illustrative embodiment of the present invention is based on the recognition that the consideration of various conditions of *availability,* in addition to the consideration of the *skills present,* affects the outcome of identifying the resources that can and will perform a task. In other words, the illustrative embodiment of the present invention enables a user to determine which resources can perform one or more tasks, based on the following criteria:
i. a skills-capable requirement that specifies one or more skills (*e.g*., able to write a business proposal, able to speak Spanish, *etc*.),
ii. a time requirement that specifies the effort, deadline, *etc*. required to perform the task, and
iii. a geographic requirement (*e.g*., in Building A; in Phoenix, Arizona; near a video conferencing center; *etc*.).

As an example, an attendant at a client workstation receives (*e.g*., via telephone, via email, via instant messaging, *etc*.) a request, whether implied or explicit, to perform a specified task. The request to perform a task is accompanied by a geographical requirement (*e.g*., to be performed in London, *etc*.) or a time requirement (*e.g*., to be performed by next Saturday, *etc.*)*,* or both.

In the example, a data-processing system, in accordance with the illustrative embodiment of the present invention, compares: (i) the skills of each resource with the skills required by the task, (ii) the geo-location of each resource with the geographic requirement of the task, and (iii) the schedule of each resource with the time requirement of the task. In particular, by tracking the *presence* of each resource at a location, the data-processing system is able to determine the *geographical availability* of the resource to perform the task.

In some embodiments of the present invention, the skills, geo-locations, and schedules of multiple resources are considered in determining the overall availability of the resources to perform a specified task. In particular, by tracking the presence of multiple resources that are at either the same or different locations, the data-processing system is able to determine the geographic availability of the multiple resources to perform the task as a team.

An illustrative embodiment of the present invention comprises: (a) receiving at a data-processing system: (i) a first signal that indicates a first non-empty set of skills associated with a first resource, and (ii) a second signal that conveys availability information associated with the first resource; and (b) transmitting from the data-processing system: (i) a task identifier that identifies a task, and (ii) a first resource identifier that identifies the first resource, wherein the first resource is transmitted based on the first set of skills, (ii) a second non-empty set of skills, and (iii) the availability of the first resource, wherein the availability is based on the availability information; wherein the task requires the second set of skills.

Figure 1 depicts telecommunications system 100 in accordance with the illustrative embodiment of the present invention.

Figure 2 depicts a block diagram of data-processing system 105, as shown in Figure 1, in accordance with the illustrative embodiment of the present invention.

Figure 3 depicts a block diagram of how information is stored and organized in memory 203, in accordance with the illustrative embodiment of the present invention.

Figure 4 depicts a flowchart of the salient tasks of data-processing system 105, in accordance with the illustrative embodiment of the present invention.

Figure 5 depicts a detailed flowchart of task 403, in accordance with the illustrative embodiment of the present invention.

Figure 6 depicts a detailed flowchart of task 404, in accordance with the illustrative embodiment of the present invention.

The terms appearing below are given the following definitions for use in this specification and appended claims.

For the purposes of the specification and claims, the term "**calendrical time**" is defined as being indicative of one or more of the following:
i. a time (*e.g*., 16:23:58, etc.),
ii. one or more temporal designations (*e.g*., Tuesday, November, *etc*.),
iii. one or more events (*e.g*., Thanksgiving, Dave's birthday, *etc*.), and
iv. a time span (*e.g*., 8:00 to 9:00, *etc*.).

For the purposes of the specification and claims, the term "**work task**" is defined as a piece of assignable work that requires one or more skills to perform. A "work task" is also referred to as a "task". Note that the term "work task" is not to be confused with the task label (*e.g*., "task 401", etc.) that is associated with the flowchart task boxes in this disclosure.

For the purposes of the specification and claims, the term "**availability information**" is defined as information from which the availability (*e.g.,* related to time, related to geo-location, *etc.*) of a resource can be determined to perform a (work) task. The availability of the resource, as opposed to the skills of the resource, is determined by using availability information.

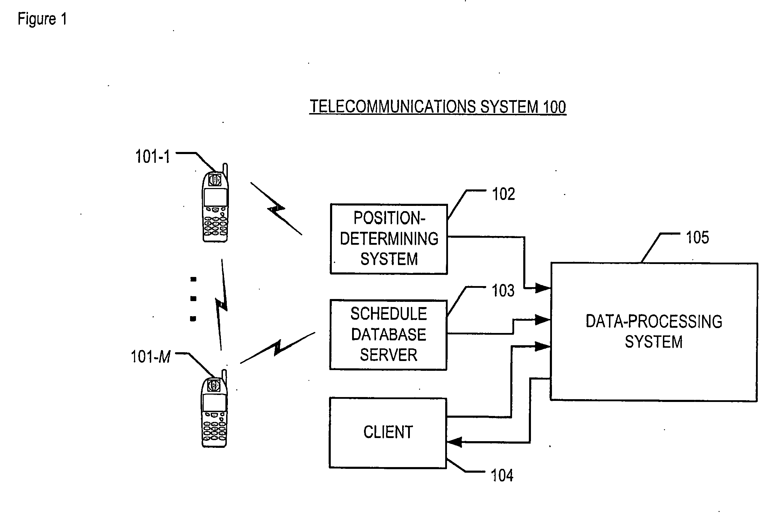

Figure 1 depicts telecommunications system 100 in accordance with the illustrative embodiment of the present invention. Telecommunications system 100 comprises telecommunications terminals 101-1 through 101-*M*, wherein *M* is a positive integer; position-determining system 102; schedule database server 103; data-processing system 105; and client 104, interconnected as shown.

Telecommunications terminals 101-*m* (also referred to as "terminal 101-*m*"), for *m*=1 through *M*, communicate with each other in well-known fashion (*e.g*., directly with each other, through a telecommunications network, *etc*.). Each terminal 101-*m* is associated with a different user who is considered to be a resource for the purposes of performing a work task. It will be clear to those skilled in the art how to make and use terminal 101-*m*.

Position-determining system 102 determines the current geo-location and velocity of terminal 101-*m*, for *m*=1 through *M,* in well-known fashion. For example, position-determining system 102 can measure the signal transmitted by terminal 101-*m* or use signal measurements taken by terminal 101-*m* to determine terminal 101-*m*'s geo-location and velocity. Position-determining system 102 transmits the geo-location and velocity of terminal 101-*m* to data-processing system 105 in well-known fashion.

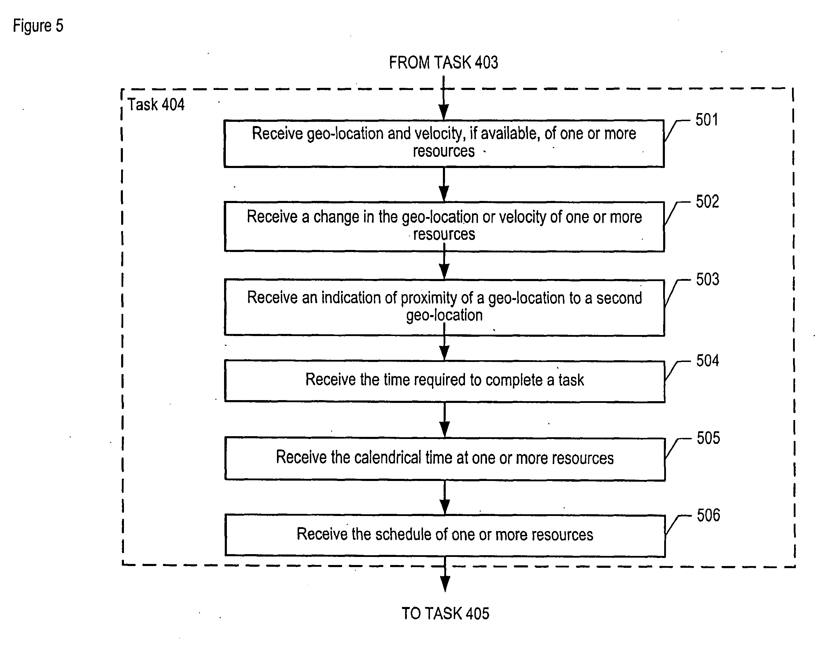

By determining the geo-location and velocity of terminal 101-*m*, position-determining system 102 also determines the geo-location and velocity of the terminal's associated user. As is described in detail below and with respect to Figure 5, telecommunications system 100 uses the geo-location and velocity of the user (*i.e*., a resource), in accordance with the illustrative embodiment of the present invention, to determine the *geographic availability* of the resource with respect to performing a task.

In some alternative embodiments, the geo-location and velocity of terminal 101-*m*'s associated user can be manually provided to data-processing system 105 (*e.g*., via client 104, *etc.*)*.*

It will be clear to those skilled in the art how to make and use position-determining system 102.

Schedule database server 103 tracks the schedule of the user (*i.e*., resource) of terminal 101-*m*, for *m*=1 through *M*, in well-known fashion. The schedule comprises all tracked appointments, meetings, time off, and obligations of the users. Schedule database server 103 receives the schedules of the users that are associated with terminals 101-*m*, for *m*=1 through *M,* in well-known fashion. For example, schedule database server 103 can receive signals that convey schedule information (*e.g*., via a Bluetooth interface, *etc*.) from each terminal 101-*m*. Alternatively, schedule database server 103 can receive direct manual input from the users associated with terminals 101-*m*, for *m*=1 through *M*. Schedule database server 103 transmits the schedule of terminal 101-*m*'s user to data-processing system 105 in well-known fashion.

As will be described later, telecommunications system 100 uses the schedule of terminal 101-*m*'s user (*i.e*., a resource), in accordance with the illustrative embodiment of the present invention, to determine the *time availability* of the resource with respect to performing a task. It will be clear to those skilled in the art how to update the schedules as often as needed to enable determining the time availability accurately enough for the particular application (*e.g*., responding to immediate needs for resources, *etc*.).

It will be clear to those skilled in the art how to make and use schedule database server 103.

Client 104 is a workstation that comprises a data entry device (*e.g*., a keyboard, *etc.*)*,* a display, and a data interface. Client 104 accepts, via data entry device input from an attendant, and transmits a work task to data-processing system 105. For each transmitted task, client 104 also provides: (i) the skills required to perform the task, (ii) one or more geographic requirements (if any), and (iii) one or more time requirements (if any), in accordance with the illustrative embodiment of the present invention. In some alternative embodiments, client 104 provides the task, and data-processing system 105 determines the skills required to perform the task provided.

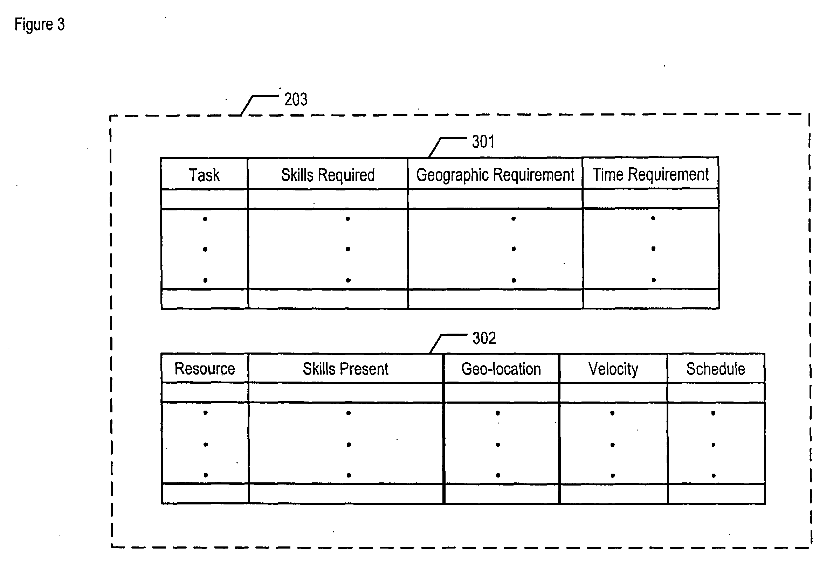

Client 104 also accepts from an attendant and transmits to data-processing system 105 each resource's non-empty skill set. The resource's skill set is described in detail below and with respect to Figure 3.

Client 104 receives one or more resource identifiers that correspond to one or more resources identified for a particular work task, where the task is identified by a task identifier that client 104 also receives. Client 104 displays the resource identifiers and task identifier, in well-known fashion.

It will be clear to those skilled in the art how to make and use client 104.

Data-processing system 105 receives data that is related to geographic availability from position-determining system 102 and data that is related to time availability from schedule database server 103. Data-processing system 105 also receives one or more tasks from client 104, as well as the skill sets for each resource. In some embodiments, data-processing system 105 might generate or accept tasks from a source other than client 104, or might generate or accept resource skill sets from a source other than client 104.

Data-processing system 105 transmits to client 104 at least one resource identifier that corresponds to a task that needs to be performed, in accordance with the illustrative embodiment of the present invention. In some alternative embodiments, data-processing system 105 transmits the resource identifier to a different device (*e.g*., a server, a display device, a telecommunications terminal, *etc*.).

It will be clear those skilled in the art, after reading this specification, how to make and use data-processing system 105.

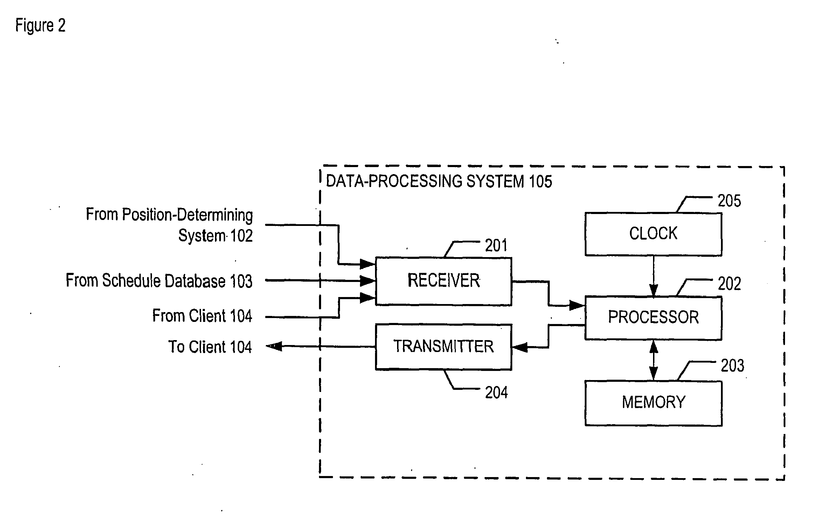

Figure 2 depicts a block diagram of the salient components of data-processing system 105, in accordance with the illustrative embodiment of the present invention. Data-processing system 105 comprises receiver 201, processor 202, memory 203, transmitter 204, and clock 205, interconnected as shown.

Receiver 201 receives signals from position-determining system 102, schedule database server 103, and client 104, and forwards the information encoded in these signals to processor 202, in well-known fashion. It will be clear to those skilled in the art, after reading this specification, how to make and use receiver 201.

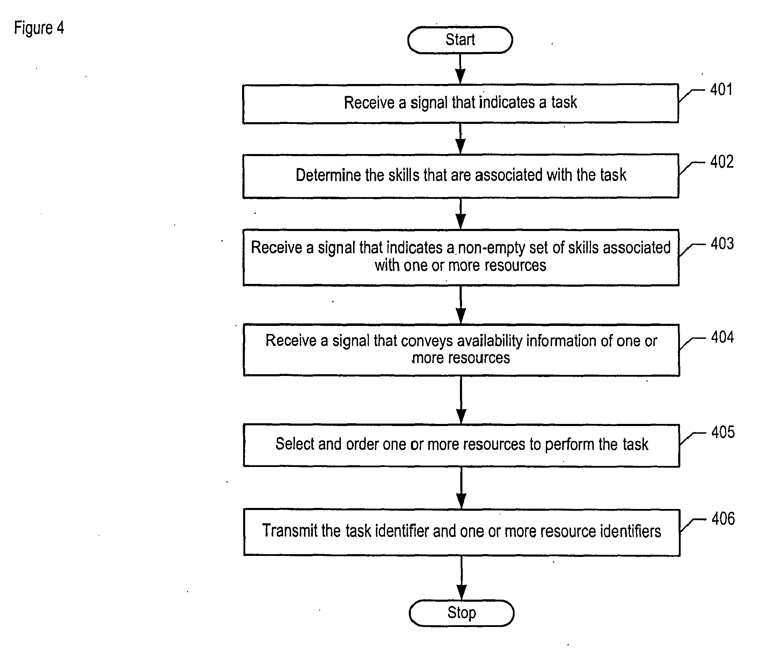

Processor 202 is a general-purpose processor that is capable of receiving information from receiver 201, of receiving timing information from clock 205, of executing instructions stored in memory 203, of reading data from and writing data into memory 203, of executing the tasks described below and with respect to Figures 4 through 6, and of transmitting information to transmitter 204. In some alternative embodiments of the present invention, processor 202 might be a special-purpose processor. In either case, it will be clear to those skilled in the art, after reading this specification, how to make and use processor 202.

Memory 203 stores data and executable instructions, as is well-known in the art, and might be any combination of random-access memory (RAM), flash memory, disk drive memory, etc. The manner in which information is stored and organized in memory 203 is described below and with respect to Figure 3. It will be clear to those skilled in the art, after reading this specification, how to make and use memory 203.

Transmitter 204 receives information from processor 202 and transmits signals that encode this information to client 104, in well-known fashion. It will be clear to those skilled in the art, after reading this specification, how to make and use transmitter 204.

Clock 205 maintains timing and calendrical time information, and provides this information to processor 202. It will be clear to those skilled in the art, after reading this specification, how to make and use clock 205.

Figure 3 depicts how information is stored and organized in memory 203, in accordance with the illustrative embodiment of the present invention. Memory 203 stores task information table 301 and resource information table 302.

Task information table 301 stores the following for each task that is received from client 104: a task identifier, the skills required to perform the task, one or more geographic requirements related to the task, and one or more time requirements related to the task.

The task identifier corresponds to a particular task. The task identifier is a string of symbols that uniquely identifies a task. Examples of such strings are "Write a technical document in Spanish" and "Build scale model engine." In some alternative embodiments, the task identifier can be a unique, alphanumeric string, such as "A1", "Q27", "WTDS", *etc.*

The skills that are required for the task are represented as strings of symbols or as natural-language phrases such as "writing," "nanotechnology," and "Spanish-speaking." In some alternative embodiments, the skills required can be encoded and stored as alphanumeric strings such as "W5", "N", "C24", *etc*.

In accordance with the illustrative embodiment of the present invention, the list of skills required is stored as a linked list. In some alternative embodiments, the list of skills required might be represented via an alternative data structure, such as a bit vector over all possible skills, in well-known fashion.

The geographic requirement is a statement (*e.g*., to be performed in Dallas, *etc*.) that describes where the task must be performed, where the finished product or service is to be delivered, *etc*.

The time requirement refers to a time interval or calendrical time requirement. For example, the time requirement could refer to the expected amount of time required to complete the task (*e.g*., four hours, nine months, *etc*.), a deadline by which time the task must be completed (*e.g*., by 5:00 pm, by December 31, *etc*.), or a constraint on when the task can (or must) be performed (*e.g*., 2:00 pm to 4:00pm every Wednesday, *etc.*)*.*

Resource information table 302 stores the following for each resource: a resource identifier, a skill set of the resource, the geo-location of the resource, the velocity of the resource, and the schedule of the resource.

The skill set of the resource is the non-empty set of skills that the resource presently possesses. The possessed skills are represented as strings of symbols or as natural-language phrases such as "stenography," "accounting," and "Russian-speaking." In some alternative embodiments, the skills can be encoded and stored as alphanumeric strings such as "G7", "RS", "AS56", *etc*.

The list of resource skills possessed is stored as a linked list, in accordance with the illustrative embodiment of the present invention. In some alternative embodiments, the list of resource skills might be represented via an alternative data structure, such as a bit vector over all possible skills, in well-known fashion.

The geo-location of the resource refers to the current location of the resource, as provided by position-determining system 102. In accordance with the illustrative embodiment of the present invention, processor 202 stores the geo-location into memory 203 as latitude and longitude. In some alternative embodiments, processor 202 might store the geo-location as Cartesian coordinates or as a combination of an area and Cartesian coordinates (*e.g*., x=10.0/y=30.0 on the third floor of Building A, *etc*.). The geographic availability of the resource is determined at least on part from the resource's geo-location information by determining where the resource is available to perform a task.

The velocity of the resource refers to the current speed and direction of movement of the resource, as provided by position-determining system 102. In accordance with the illustrative embodiment of the present invention, processor 202 stores the velocity into memory 203 as speed and direction of movement. The geographic availability of the resource is determined at least in part from the resource's velocity information by determining where the resource is heading and when the resource might be available there to perform a task.

The resource's schedule, as received from schedule database server 103, refers to the time intervals during which a resource is occupied. For example, each interval is a time span such as "from 1:00 pm to 4:00pm on Monday", "from 8:00 am to 1:00 pm on Wednesday", *etc*. The schedule is made up of individual time intervals as well as repeating events (*e.g*., every Friday from 10:00 am to 11:00 am, *etc*.). The time availability of the resource is determined from the resource's schedule by determining when the resource is not scheduled to do something else, such as performing another task.

In some embodiments, the resource's schedule also maintains geo-location information along with time interval information. For instance, a resource might be already scheduled to perform a task "from 8:00 am until 1:00 pm on August 11 in Munich". If the resource is free afterwards and a task needs to be performed on August 11 in the afternoon in Munich, then the resource is both available geographically and available in time to perform that task in Munich.

Figure 4 depicts a flowchart of the salient tasks performed by data-processing system 105, in accordance with the illustrative embodiment of the present invention. It will be clear to those skilled in the art which tasks depicted in Figure 4 can be performed simultaneously or in a different order than that depicted.

At task 401, receiver 201 receives, in well-known fashion, a signal that indicates a task to be performed by one or more resources.

At task 402, processor 202 determines, in well-known fashion, which skills are required to perform a task. For example, an attendant at client 104 might have previously entered the required skills for each of a wide variety of possible tasks. Alternatively, subject matter experts working with the attendant might determine the required skills for each task as the tasks arrive. Processor 202 stores the required skills for each arriving task into table 301.

At task 403, receiver 201 receives for each of one or more resources, in well-known fashion, a signal that indicates a non-empty set of skills that the resource presently possesses.

At task 404, receiver 201 receives for each of one or more resources, in well-known fashion, a signal that conveys availability information of the resource. Task 404 is described in detail below and with respect to Figure 5.

As will be appreciated by those who are skilled in the art, the information received at tasks 401, 403, and 404 might arrive concurrently or in a different order than that described. Furthermore, the information received at tasks 401, 403, and 404 might arrive from the same source or from different sources. For example, new tasks might arrive continually, even though the skills of one or more resources might require only occasional updating, or no updating at all.

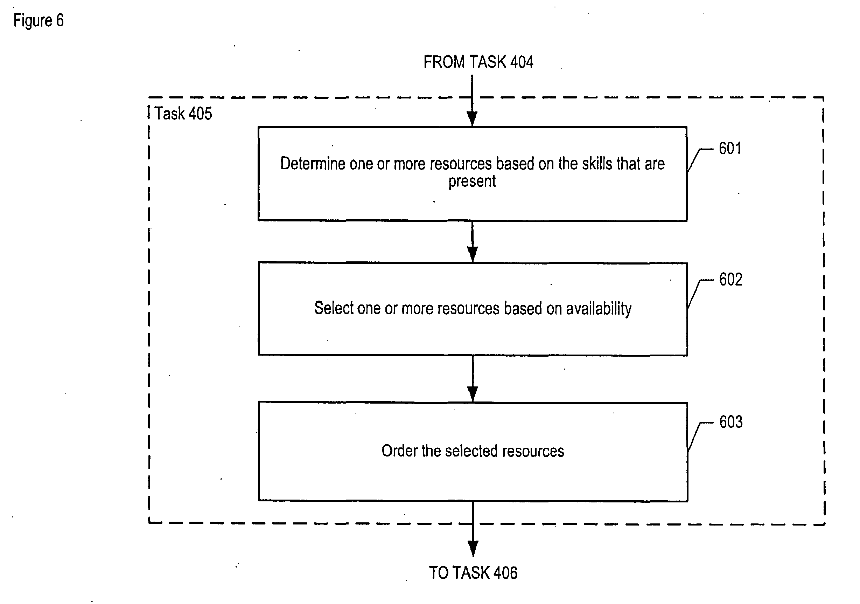

At task 405, processor 202 selects at least one resource based on one or more conditions, such as the resource or resources being skills-qualified (*i.e*., possessing the skills required to perform the tasks identified), geographically available, and available in time. In some embodiments, processor 202 might order the resources, based on one or more properties. Task 405 is described in detail below and with respect to Figure 6.

At task 406, transmitter 204 transmits, in well-known fashion: (i) a task identifier of the task that needs to be performed, and (ii) one or more resource identifiers of the resources that have been selected to perform the tasks. The transmission conveys the one or more resource identifiers in a format that indicates that they are hierarchically subordinate to (and associated with) the task identifier. An example of the hierarchical format is the group/person relationship of an instant messaging "buddy list," in which the people that are associated with a particular group appear on a display as being subordinate to the group. In accordance with the illustrative embodiment, the available resources that are associated with a particular task are indicated in the transmission as being subordinate to the task.

Figure 5 depicts a detailed flowchart of task 404 in accordance with the illustrative embodiment of the present invention. It will be clear to those skilled in the art which tasks depicted in Figure 5 can be performed simultaneously or in a different order than that depicted.

At task 501, receiver 201 optionally receives the current geo-location and velocity, if available, of one or more resources (*e.g.*, from position-determining system 102, *etc.*).

At task 502, receiver 201 optionally receives notification of a change in the geo-location or velocity of one or more resources (*e.g*., from position-determining system 102, *etc.*)*.*

At task 503, receiver 201 optionally receives notification of the proximity of the current geo-location of one or more resources to a second geo-location (*e.g*., from position-determining system 102, from client 104, *etc*.). For example, the second geo-location might be (i) the geo-location of another resource (*e.g*., a co-worker, *etc*.), (ii) the geo-location of the person who is specifying the task to be performed (*e.g*., a customer, *etc*.), or (iii) the geo-location of a facility (*e.g*., the plumbing department within a home improvement store, *etc*.).

At task 504, receiver 201 optionally receives the time required to complete the task (*e.g*., from client 104, *etc*.).

At task 505, receiver 201 optionally receives the calendrical time at one or more resources (*e.g*., from schedule database server 103, *etc.*)*.*

At task 506, receiver 201 optionally receives the schedule of one or more resources (*e.g*., from schedule database server 103, *etc*.).

Figure 6 depicts a detailed flowchart of task 405 in accordance with the illustrative embodiment of the present invention. It will be clear to those skilled in the art which tasks depicted in Figure 6 can be performed simultaneously or in a different order than that depicted.

At task 601, processor 202 compares (i) the skills of the resource being considered for a task (also referred to as "the first non-empty set of skills") with (ii) the skills required to perform the task (also referred to as "the second non-empty set of skills"). For example, if one of the required skills to perform a task is "Spanish-speaking," but a resource that is being considered is "Russian-speaking" (but not Spanish-speaking), then that resource is eliminated from further consideration. In this way, processor 202 generates a candidate list of one or more resources.

At task 602, processor 202 compares the availability information from task 403 that corresponds to each resource in the candidate list with the geographic-requirement field and time-requirement field from table 301.

As a first example, if a task has to be completed by 5:00pm on Friday and requires two days to complete, and a resource on the candidate list is on a business trip until Friday morning, then that resource is eliminated from further consideration. In other words, that resource is determined to be unavailable.

As a second example, if a task (i) has to be completed by the end of the day, (ii) takes one hour to complete, and (iii) requires a resource to be in Dallas, Texas, then a resource on the candidate list who is currently in Dallas and has one hour of free time is determined to be available.

As a third example, if a task has to be completed within four hours and takes five hours to complete, then neither of two resources working alone would be able to perform the task; consequently, neither resource would be considered available. The same two resources, however, working together in parallel would be able to perform a task on time and, as a result, would be considered available for the task.

As a fourth example, if a task requires a resource in Seoul and a resource in Seattle, but there is only a resource presently located in Seoul (but not in Seattle), then there are insufficient resources available to perform the task. If, however, a resource becomes available in Seattle, then both resources are considered to be available.

As will be appreciated by those skilled in the art, the manner in which tasks 601 and 602 are performed depends in part on how table 302 is stored in memory 203. Table 302 is stored in a relational database in accordance with the illustrative embodiment of the present invention; as a result, processor 202 performs tasks 601 and 602 via a relational query. In some alternative embodiments, table 302 can be stored as an unorganized "flat file," that would require processor 202 to traverse the table in a row-by-row fashion.

At task 603, processor 202 arranges all of the available, skills-qualified resources in a meaningful order. In some embodiments, the ordering is based on the geo-locations of two or more resources. As one example, the closest resource to a task-related party might be preferred over a resource that is further away. As another example, two collocated resources might be preferred over two non-collocated resources. In some other embodiments, the ordering might be based on the durations of availability of two or more resources. For example, if two resources are each able to complete a two-day task, the resource that is available for three days might be preferred over―and, therefore, ordered ahead of―the resource that is available for only two days because the task might end up taking more time than the prescribed two days.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, *etc*.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising:
(a) receiving at a data-processing system:
(i) a first signal that indicates a first non-empty set of skills associated with a first resource, and
(ii) a second signal that conveys availability information associated with said first resource; and
(b) transmitting from said data-processing system:
(i) a task identifier that identifies a task, and
(ii) a first resource identifier that identifies said first resource, wherein said first resource is transmitted based on said first set of skills, (ii) a second non-empty set of skills, and (iii) the availability of said first resource, wherein the availability is based on said availability information;
wherein said task requires said second set of skills.

2. The method of claim 1 wherein said availability information associated with said first resource is based on at least one of:
(i) the geo-location of said first resource,
(ii) a change in the geo-location of said first resource, and
(iii) the proximity of said geo-location to a second geo-location.

3. The method of claim 1 wherein said availability information associated with said first resource is based on at least one of:
(i) the time required to complete said task,
(ii) the calendrical time at said first resource, and
(iii) the schedule of said first resource.

4. The method of claim 1 further comprising transmitting a second resource identifier that identifies a second resource, wherein said first resource identifier and said second resource identifier are ordered in the transmission.

5. The method of claim 4 wherein the ordering is based on the geo-locations of said first resource and said second resource.

6. The method of claim 4 wherein the ordering is based on the lengths of availability of said first resource and said second resource.

7. The method of claim 1 further comprising receiving a third signal that conveys availability information associated with a second resource, wherein the transmitting of said first resource identifier is also based on (iii) the availability of said second resource, wherein the availability is based on said availability information.

8. A method comprising:
(a) receiving at a data-processing system:
(i) a first signal that indicates a first non-empty set of skills associated with a first resource,
(ii) a second signal that conveys availability information associated with said first resource, and
(iii) a third signal that conveys availability information associated with a second resource; and
(b) transmitting from said data-processing system:
(i) a task identifier that identifies a task, and
(ii) a first resource identifier that identifies said first resource wherein said first resource is transmitted based on said first set of skills, (ii) a second non-empty set of skills, (iii) the availability of said first resource, and (iv) the availability of said second resource;
wherein said task requires said second set of skills; and
wherein the availabilities of said first and second resource are based on said availability information associated with said first and second resource, respectively.

9. The method of claim 8 wherein said availability information associated with said first resource is based on at least one of:
(i) the geo-location of said first resource,
(ii) a change in the geo-location of said first resource, and
(iii) the proximity of said geo-location to a second geo-location

10. The method of claim 8 wherein said availability information associated with said first resource is based on at least one of:
(i) the time required to complete said task,
(ii) the calendrical time at said first resource, and
(iii) the schedule of said first resource.

11. The method of claim 8 wherein said second geo-location is the geo-location of said second resource.

12. The method of claim 8 further comprising receiving a fourth signal that indicates said task, wherein the transmission of said first resource identifier is also based on (iv) said task.

13. A method comprising:
(a) receiving at a data-processing system:
(i) a first signal that indicates a first non-empty set of skills associated with a first resource,
(ii) a second signal that conveys availability information associated with said first resource,
(iii) a third signal that indicates a task; and
(b) transmitting from said data-processing system a first resource identifier that identifies said first resource, wherein said first resource identifier is transmitted based on (i) said first set of skills, (ii) a second non-empty set of skills, (iii) the availability of said first resource, wherein the availability is based on said availability information, and (iv) said task;
wherein said task requires said second set of skills.

14. The method of claim 13 further comprising comparing said first non-empty set with said second non-empty set.

15. The method of claim 13 further comprising transmitting a second resource identifier that identifies a second resource, wherein said first resource identifier and said second resource identifier are ordered in the transmission.

16. The method of claim 15 wherein the ordering is based on the geo-locations of said first resource and said second resource.

17. The method of claim 15 wherein the ordering is based on the lengths of availability of said first resource and said second resource.

18. The method of claim 13 wherein said availability information associated with said first resource is based on at least one of:
(i) the geo-location of said first resource,
(ii) a change in the geo-location of said first resource, and
(iii) the proximity of said geo-location to a second geo-location.

19. The method of claim 13 wherein said availability information associated with said first resource is based on at least one of:
(i) the time required to complete said task,
(ii) the calendrical time at said first resource, and
(iii) the schedule of said first resource.

20. The method of claim 13 further comprising transmitting a task identifier that identifies said task, wherein the transmission conveys that said first resource identifier is hierarchically subordinate to said task identifier.
